# DEMANDE DE BREVET EUROPEEN

(11) **EP 4 686 654 A1**
(43) Date de publication de la demande: **04.02.2026**
(21) Numéro de dépôt: 25192200.1
(22) Date de dépôt: 28.07.2025
(51) Int. Cl.: B64D 33/02

(54) **BRIDE DE JONCTION POUR NACELLE D' AÉRONEF AVEC ZONE DE SOUPLESSE**

(30) Priorité: 31.07.2024 FR 2408459
(71) Demandeur: AIRBUS OPERATIONS (S.A.S.), 31060 Toulouse (FR); Airbus (S.A.S.), 31700 Blagnac (FR)
(72) Inventeur: ALBET, Grégory, 31060 TOULOUSE (FR); LE CLAINCHE, Stéphane, 31700 BLAGNAC (FR); SENTIER, Julien, 31060 TOULOUSE (FR); DUBUC, Pauline, 31060 TOULOUSE (FR)
(74) Mandataire: Airbus-OPS SAS

(57) **Abrégé**

L'invention concerne une bride pour la jonction d'un compartiment moteur (5) à un compartiment d'entrée d'air (4) d'un aéronef, comportant une première aile, appelée base (11), conformée pour être posée sur une surface extérieure (S) de l'un du compartiment moteur (5) ou du compartiment d'entrée d'air (4), dite surface de montage, et une deuxième aile appelée, aile de jonction (12), comprenant au moins un orifice de passage d'un élément de liaison de ladite bride de jonction (1) à une autre bride, inclinée relativement à la base (11), la bride de jonction (1) comprenant au moins une gorge (17) creusée dans l'aile de jonction (12), de sorte à créer un rétrécissement local de section.

## Description

### Domaine technique

La présente invention se rapporte à une bride pour la jonction d'un compartiment moteur à un compartiment d'entrée d'air d'une nacelle d'aéronef.

### Technique antérieure

Une nacelle d'aéronef comprend généralement un compartiment d'entrée d'air et un compartiment moteur solidarisés l'un à l'autre par un dispositif de liaison. Le dispositif de liaison comprend quant à lui au moins deux brides de jonction montées l'une contre l'autre et liées par un ensemble de boulons.

Le dispositif de liaison doit assurer l'intégrité de la structure de la nacelle en cas de dommage moteur, y compris en cas de perte d'aube (« Fan Blade Off » ou FBO, en anglais). La perte d'aube est un événement au cours duquel une pale de la soufflante du réacteur se détache de son arbre, entraînant avec elle des dommages sur l'ensemble propulsif. Les exigences de certification imposent qu'en aucun cas l'entrée ne puisse se détacher du moteur et tomber au sol. La conception du dispositif de liaison est donc faite avec l'objectif de répondre à cette contrainte.

Plus précisément, si une des pales de la soufflante se détache, une grande quantité d'énergie est libérée. Le moteur ne stoppe pas instantanément sa rotation et un fort balourd s'exerce sur la structure de la nacelle. C'est la phase dite de « rundown » : la rotation de la soufflante diminue, mais le balourd engendre une déformation de la structure. L'énergie libérée est d'abord très importante puis décroit, ce qui se traduit sur la structure par une vague tournante au rythme de la rotation du moteur. La vague d'énergie, alimentée par le balourd, crée une déformation évolutive au niveau du dispositif de liaison. La bride de jonction doit alors résister afin que l'entrée d'air reste solidaire du réacteur.

Une solution connue consiste à ajouter aux brides de jonction et à l'ensemble de boulons des pièces supplémentaires, par exemple des cornières intercalées entre les brides, pour absorber la déformation et en limiter la propagation.

Néanmoins, cette solution est délicate à mettre en œuvre et complexifie la fabrication de la nacelle.

Le but de l'invention est de remédier au moins partiellement à ces inconvénients.

### Résumé

A cet effet, il est proposé une bride pour la jonction d'un compartiment moteur à un compartiment d'entrée d'air d'un aéronef, comportant une première aile, appelée base, conformée pour être posée sur une surface extérieure de l'un du compartiment moteur ou du compartiment d'entrée d'air, dite surface de montage, et une deuxième aile, appelée aile de jonction, inclinée relativement à la base et comprenant au moins un orifice de passage d'un élément de liaison de ladite bride à une autre bride, la bride de jonction comprenant au moins une gorge creusée dans l'aile de jonction, de sorte à créer un rétrécissement local de section.

Grâce à la bride de jonction selon la présente invention, il est possible d'absorber la vague de déformation en cas de perte d'aube, le rétrécissement local de section dû à la gorge formant une zone de déformation de la bride. Ainsi, c'est la bride elle-même, par sa déformation, qui permet d'éviter la propagation de déformation en cas de FBO, sans qu'il soit nécessaire d'ajouter toute autre pièce à la liaison entre le compartiment moteur et le compartiment entrée d'air.

Selon un autre aspect, la gorge s'étend parallèlement à un bord longitudinal de l'aile de jonction.

Selon un autre aspect, la gorge s'étend sur la longueur complète du bord longitudinal de l'aile de jonction.

Selon un autre aspect, la gorge s'étend sur une partie seulement de la longueur du bord longitudinal de l'aile de jonction.

Selon un autre aspect, la gorge s'étend dans une moitié inférieure, en hauteur, de l'aile de jonction, lorsque la bride est montée sur la surface de montage.

Selon un autre aspect, l'aile de jonction comprend des festonnages autour dudit au moins un orifice de passage d'un élément de liaison.

Selon un autre aspect, la bride comprend deux gorges, chaque gorge affleurant d'une face opposée de l'aile de jonction.

On note que chaque gorge affleure d'une face de l'aile de jonction sans atteindre une face opposée de l'aile de jonction.

L'invention a également pour objet un dispositif de liaison d'un compartiment moteur à un compartiment d'entrée d'air d'un aéronef, comprenant une première bride et une deuxième bride, disposée contre la première bride, l'une au moins de ladite première et deuxième brides étant une bride de jonction telle que précédemment décrite, le dispositif de liaison comprenant un élément de liaison verrouillé dans ledit au moins un orifice de passage.

Selon un autre aspect, chacune des première et deuxième brides est une bride de jonction telle que précédemment décrite.

L'invention a également pour objet une nacelle pour aéronef, comprenant un compartiment moteur, un compartiment d'entrée d'air et un dispositif de liaison tel que décrit précédemment, le compartiment moteur et le compartiment d'entrée d'air étant solidarisés l'un à l'autre par le dispositif de liaison.

L'invention a également pour objet un aéronef, comprenant une nacelle telle que précédemment décrite.

### Brève description des dessins

D'autres caractéristiques, détails et avantages apparaîtront à la lecture de la description détaillée ci-après, et à l'analyse des dessins annexés, sur lesquels :
**Fig. 1**

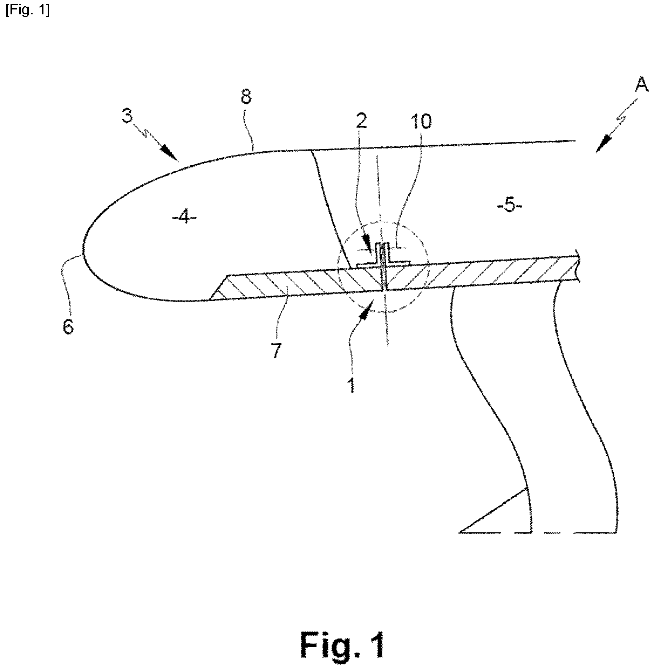

   [Fig. 1] est une coupe schématique selon un plan radial d'une partie de l'avant d'un aéronef comprenant un dispositif de liaison selon la présente invention.
**Fig. 2**

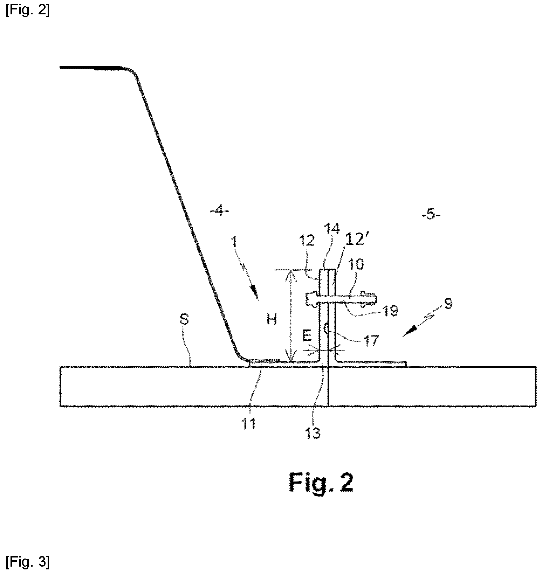

   [Fig. 2] est une coupe schématique selon un plan radial du dispositif de liaison de la figure 1.
**Fig. 3**

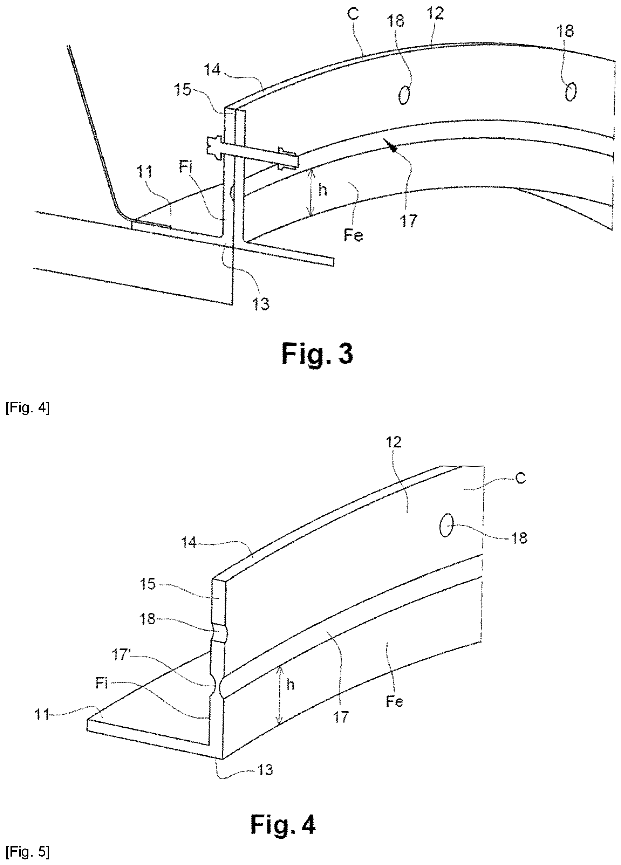

   [Fig. 3] est une vue schématique en perspective d'un détail du dispositif de liaison de la figure 1 (comprenant une bride de jonction et une bride côté motorisation, cette dernière étant partiellement illustrée).
**Fig. 4**
   [Fig. 4] est une vue schématique en perspective d'un détail du dispositif de liaison de la figure 1, selon une variante de réalisation.
**Fig. 5**

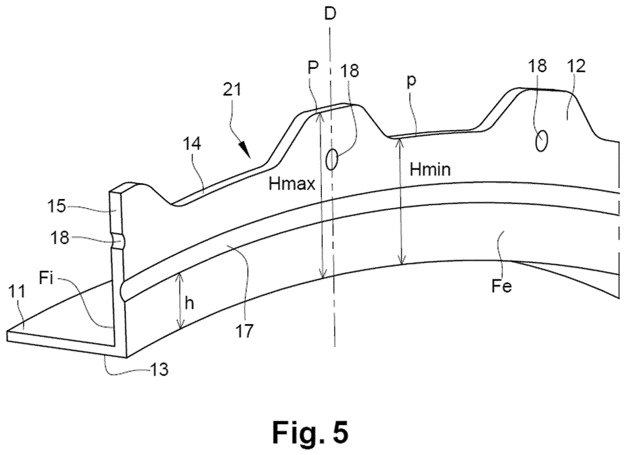

   [Fig. 5] est une vue schématique en perspective d'un détail du dispositif de liaison de la figure 1, selon un autre mode de réalisation.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en œuvre relativement simplifiées de la présente invention. Comme l'homme du métier le comprend, d'autres mises en œuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en œuvre de la présente invention, ainsi que les exemples spécifiques de celle-ci, visent à englober à la fois les équivalents structurels et fonctionnels de celle-ci, qu'ils soient actuellement connus ou développés à l'avenir.

Comme il ressort des figures, l'invention a pour objet une bride de jonction 1 pour un dispositif de liaison 2 d'une nacelle 3 d'un l'aéronef A. L'invention a également pour objet le dispositif de liaison 2 comprenant la bride 1.

Sur la figure 1, la nacelle 3 comprend un compartiment d'entrée d'air 4 et un compartiment moteur 5, encore appelé motorisation, dans le prolongement de l'entrée d'air 4. L'entrée d'air 4 est disposée à l'avant de la nacelle 3 et permet de canaliser un flux d'air en direction de la motorisation 5. L'entrée d'air 4 comprend une lèvre 6 dont la surface en contact avec les flux aérodynamiques est prolongée à l'intérieur de la nacelle par un conduit intérieur 7 et à l'extérieur de la nacelle par une paroi extérieure 8. L'entrée d'air 4 est reliée à la motorisation 5 par le dispositif de liaison 2.

Le dispositif de liaison 2 comprend la bride 1 disposée côté entrée d'air 4 et une bride 9 disposée côté motorisation 5, des boulons 10 solidarisant les brides 1, 9 entre elles, comme il sera détaillé ultérieurement.

On décrit maintenant en détail la bride de jonction 1, en relation avec les figures 2 à 5.

Comme il ressort de ces figures, la bride 1 comprend une première aile, appelée base, 11 et une deuxième aile, 12, appelée aile de jonction, inclinée par rapport à la base 11. La base 11 est conformée pour être posée sur une surface extérieure S de l'un du compartiment moteur 5 ou du compartiment d'entrée d'air 4, dite surface de montage S.

Sur les figures, la surface de montage S est la surface supérieure du conduit intérieur 7 de l'entrée d'air 4.

Sur les modes de réalisation illustrés, l'aile de jonction 12 est disposée orthogonalement à la base 11.

Chacune des deux ailes, la base 11 et l'aile de jonction 12, présente avantageusement une forme générale d'une portion de couronne circulaire C.

L'aile de jonction 12 est délimitée par deux bords longitudinaux opposés, référencés 13 et 14, et deux bords transversaux opposés, dont seul l'un, référencé 15, est visible sur les figures. Le bord longitudinal 13 fait jonction avec la base 11 et repose sur la surface de montage 12, tandis que le bord longitudinal 14 est libre. La hauteur H de la couronne C est la distance entre les bords longitudinaux 13 et 14. Une épaisseur E de la couronne C est l'épaisseur des bords transversaux et délimite une face externe Fe de l'aile de jonction 12 et une face interne Fi de l'aile de jonction 12. La face interne Fi est disposée du côté de la base 11, c'est-à-dire vers l'entrée d'air 4. La face externe Fe est disposée vers le compartiment 5, et est conformée à être en contact avec une aile de jonction 12' de la bride 9, comme il sera détaillé ultérieurement.

Comme il ressort des figures 2 à 5, la bride de jonction 1 comprend au moins une gorge 17 creusée dans l'aile de jonction 12 de sorte à créer un rétrécissement local de section. En d'autres termes, la gorge 17 crée une diminution de l'épaisseur E de l'aile de jonction 12.

La gorge 17 est par exemple réalisée par usinage orbital.

La gorge peut être de toute forme appropriée, avantageusement de section courbe, par exemple semi-circulaire, comme visible sur les figures.

En affinant la section localement, c'est-à-dire en réduisant la matière, une zone de souplesse est générée, qui permet la déformation élastique et programmée de la bride 1. Ainsi, en cas de dommage moteur, et notamment en cas de perte d'aube, la bride se déforme par sa zone de souplesse, ce qui permet d'absorber une partie au moins de la déformation de la structure.

Le nombre de gorges 17, leurs dimensions et localisations sont choisis de sorte à rester dans les limites de plasticité de la bride 1 et ne pas atteindre la rupture, même en cas de FBO.

Sur les figures 2 et 3, la bride 1 comprend une unique gorge 17, s'étendant parallèlement aux bords longitudinaux 13, 14, sur toute la circonférence de l'aile de jonction 12. La gorge 17 est plus proche du bord longitudinal 13 que du bord longitudinal 14, bien que, comme expliqué ci-avant, l'invention n'est pas limitée à cette position. Sur les figures 2 et 3, la gorge 17 affleure la face externe Fe de l'aile de jonction 12.

Selon la variante de la figure 4, la bride 1 comprend, en plus de la gorge 17, une gorge 17' qui affleure la face interne Fi de l'aile de jonction 12. Les gorges 17 et 17' sont placées face à face. En d'autres termes, les gorges 17 et 17' sont creusées de part et d'autre de l'épaisseur E de l'aile de jonction 12 à une même hauteur h.

L'invention n'est pas limitée à cette variante et les deux gorges 17, 17' peuvent ne pas être disposées à la même hauteur h.

Dans chacun des modes de réalisation illustrés, l'aile de jonction 12 comprend des orifices traversants 18, pour le passage d'une tige 19 d'un élément de liaison. L'élément de liaison est par exemple un boulon 10, la tige 19 étant celle d'une vis, comme visible sur les figures 1 à 3. De préférence, les orifices 18 sont régulièrement espacés.

Selon le premier mode de réalisation, illustré sur les figures 2 à 4, le bord longitudinal libre 14 est plat, et la hauteur H de l'aile de jonction 12 est constante. Selon le deuxième mode de réalisation, illustré sur la figure 5, le bord longitudinal libre 14 comprend des découpes, ou festonnages, 21, autour des orifices 18. Autrement dit, la hauteur H de l'aile de jonction 12 évolue longitudinalement.

Pour chaque orifice 18, on note D une droite passant par l'orifice 18 et perpendiculaire au bord longitudinal 13. La hauteur H est plus grande au droit de chaque orifice 18 (hauteur Hmax) puis diminue symétriquement par rapport à la droite D, entre un plateau P à la hauteur Hmax jusqu'à un plateau p à une hauteur Hmin. La hauteur Hmin correspond sensiblement au niveau de positionnements des orifices 18.

Ce mode de réalisation présente l'avantage de protéger la zone autour du boulon en assouplissant globalement la bride grâce aux festonnages 21, tout en augmentant la souplesse de la bride 1, ce qui renforce l'absorption de la déformation par la bride 1.

On décrit maintenant le dispositif de liaison 2.

Comme déjà indiqué, le dispositif de liaison 2 comprend la bride 1 ainsi que la bride 9. La bride 9 est soit une bride de l'art antérieur, sans gorge 17, soit une bride conforme à la présente invention, auquel cas elle présente au moins une gorge 17. On ne détaille pas plus la bride 9 et on se réfèrera à la description qui précède, qui s'applique alors également à la bride 9.

Les brides 1 et 9 sont fixées l'une à l'autre par les boulons 10, les tiges 19 des vis s'insérant dans les orifices traversants 18 et des écrous venant serrer les vis. Les boulons 10 forment des éléments de liaison de la bride 1 à la bride 9.

Comme il ressort déjà de la description qui précède, la bride 1 permet d'absorber les déformations en cas de perte d'aube.

Avantageusement, les dimensions de la gorge 17 (longueur, diamètre) sont choisis de sorte que la déformation absorbée par la bride 1 corresponde à l'énergie libérée pendant le FBO.

La bride 1 est particulièrement adaptée aux nouvelles architectures moteur type UHBR (« Ultra-High Bypass Radio ») dont les soufflantes sont élargies et pour lesquelles l'énergie libérée pendant une perte d'aube est encore plus grande. Avec ces configurations moteur, les boulons sont encore plus sollicités en cas de FBO et la bride 1 en permet une protection efficace grâce à la zone de souplesse. La bride 1 peut se déformer de manière localisée et contrôlée et ainsi protéger les boulons et donc la jonction entre l'entrée d'air 4 et le moteur 5.

De surcroît, la réduction de matière dans la zone de souplesse permet de réduire la masse de la bride, ce qui contribue à un allègement de l'aéronef.

On note que par gorge on entend toute rainure non traversante. La ou les gorge(s) ne perce(nt) pas la matière de l'aile de jonction 12 de part en part depuis la face Fe jusqu'à la face Fi ou inversement. Au contraire, il reste de la matière entre la gorge et la face par laquelle la gorge n'affleure pas.

Des modifications et des améliorations aux mises en œuvre décrites ci-dessus de la présente invention peuvent apparaître à l'homme du métier. En particulier, les modes de réalisation et variantes décrites sont combinables dans la mesure où ils ne sont pas incompatibles. La description ci-dessus est illustrative au travers d'exemples plutôt que limitative. La portée de la présente invention est donc limitée uniquement par la portée des revendications ci-dessous.

## Revendications

1. Bride pour la jonction d'un compartiment moteur (5) à un compartiment d'entrée d'air (4) d'un aéronef (A), comportant une première aile, appelée base (11), conformée pour être posée sur une surface extérieure (S) de l'un du compartiment moteur (5) ou du compartiment d'entrée d'air (4), dite surface de montage, et une deuxième aile appelée, aile de jonction (12), comprenant au moins un orifice de passage (18) d'un élément de liaison (10) de ladite bride de jonction (1) à une autre bride, inclinée relativement à la base (11), la bride de jonction (1) comprenant au moins une gorge (17) creusée dans l'aile de jonction (12), de sorte à créer un rétrécissement local de section.

2. Bride selon la revendication 1, dans laquelle la gorge (17) s'étend parallèlement à un bord longitudinal (13, 14) de l'aile de jonction (12).

3. Bride selon la revendication précédente, dans laquelle la gorge (17) s'étend sur la longueur complète du bord longitudinal (13, 14) de l'aile de jonction (12).

4. Bride selon la revendication 2, dans laquelle la gorge s'étend sur une partie seulement de la longueur du bord longitudinal (13, 14) de l'aile de jonction (12).

5. Bride selon l'une des revendications précédentes, dans laquelle la gorge (17) s'étend dans une moitié inférieure, en hauteur, de l'aile de jonction (12).

6. Bride selon l'une des revendications précédentes, dans laquelle l'aile de jonction (12) comprend des festonnages (21) autour dudit au moins un orifice (18) de passage d'un élément de liaison (10).

7. Bride selon l'une des revendications précédentes, comprenant deux gorges (17, 17'), chaque gorge affleurant une face opposée (Fe, Fi) de l'aile de jonction (12).

8. Dispositif de liaison d'un compartiment moteur (5) à un compartiment d'entrée d'air (4) d'un aéronef (A), comprenant une première bride (1) et une deuxième bride (9) disposée contre la première bride (1), l'une au moins de ladite première et deuxième brides étant une bride de jonction selon l'une des revendications précédentes, le dispositif de liaison (2) comprenant un élément de liaison verrouillé dans ledit au moins un orifice de passage (18).

9. Dispositif de liaison selon la revendication précédente, dans lequel chacune des première et deuxième brides est une bride de jonction selon l'une des revendications 1 à 6.

10. Nacelle pour aéronef, comprenant un compartiment moteur, un compartiment d'entrée d'air et un dispositif de liaison selon l'une des revendications 7 ou 8, le compartiment moteur et le compartiment d'entrée d'air étant solidarisés l'un à l'autre par le dispositif de liaison

11. Aéronef, comprenant une nacelle selon la revendication précédente.
